Europäisches Patentamt

European Patent Office

Office européen des brevets

(11) Veröffentlichungsnummer: **0 297 469**
**A2**

## (12) EUROPÄISCHE PATENTANMELDUNG

(21) Anmeldenummer: **88110161.2**

(22) Anmeldetag: **25.06.88**

(51) Int. Cl.⁴ **B23D 47/08 , B23D 45/04 , B23D 45/06**

(30) Priorität: **30.06.87 DE 3721471**

(43) Veröffentlichungstag der Anmeldung:
**04.01.89 Patentblatt 89/01**

(84) Benannte Vertragsstaaten:
**AT BE CH ES FR GB IT LI NL**

(71) Anmelder: **Chr. Eisele Maschinenfabrik GmbH
& Co. KG.
Nürtinger Strasse 9 - 15
D-7316 Köngen(DE)**

(72) Erfinder: **Lauffer, Adelbert
Odenwaldstrasse 2
D-7410 Reutlingen 28(DE)**

(74) Vertreter: **Hoeger, Stellrecht & Partner
Uhlandstrasse 14c
D-7000 Stuttgart 1(DE)**

(54) **Kreissägemaschine.**

(57) Eine Kreissägemaschine weist ein Maschinengestell, ein Getriebegehäuse, ein am Getriebegehäuse drehend gelagertes, motorisch angetriebenes Kreissägeblatt und eine Schwenkachse zur - schwenkbaren Lagerung des Getriebegehäuses auf. Die Schwenkachse ist an ihrem einen Ende fest mit dem Maschinengestell verbunden und an ihrem anderen Ende in zwei einen Winkel zwischen sich einschließenden Laschen gelagert. Jede dieser Laschen ist über einen am Maschinengestell drehbar gelagerten Exzenter derart verstellbar, daß die Schwenkachse und mit ihr das Kreissägeblatt nach zwei Koordinatenrichtungen hin ausrichtbar ist.

FIG. 2

EP 0 297 469 A2

## Kreissägemaschine

Die Erfindung betrifft eine Kreissägemaschine mit einem Maschinengestell, einem Getriebegehäuse. einem am Getriebegehäuse drehend gelagerten. motorisch angetriebenen Kreissägeblatt und einer am Maschinengestell angeordneten Schwenkachse zur schwenkbaren Lagerung des Getriebegehäuses.

Bei Kreissägemaschinen dieser Art ist es erforderlich, die Ebene des Kreissägeblattes nach zwei Richtungen hin auszurichten. so daß an einem Werkstück ein ordnungsgemäßer Trennschnitt mit sauberen. ebenen Schnittflächen ausgeführt werden kann.

Es ist Aufgabe der Erfindung, einfache Mittel anzugeben, mit deren Hilfe eine solche Ausrichtung des Sägeblattes rasch und bequem ausführbar ist.

Die Aufgabe wird bei einer gattungsgemäßen Kreissägemaschine dadurch gelöst. daß die Schwenkachse an ihrem einen Ende fest mit dem Maschinengestell verbunden und an ihrem anderen Ende in zwei einen Winkel zwischen sich einschließenden Laschen gelagert ist. und daß jede dieser Laschen über einen am Ma schinengestell drehbar gelagerten Exzenter derart verstellbar ist. daß die Schwenkachse und mit ihr das Kreissägeblatt nach zwei Koordinatenrichtungen hin ausrichtbar ist.

Die nachstehende Beschreibung einer bevorzugten Ausführungsform der Erfindung dient im Zusammenhang mit beiliegender Zeichnung der weiteren Erläuterung.

Es zeigen:

Fig. 1 schematisch eine Kreissägemaschine mit schwenkbarem Kreissägeblatt;

Fig. 2 eine geschnittene Einzelansicht im Bereich einer Schwenkachse der Maschine nach Fig. 1 und

Fig. 3 eine Schnittansicht entlang der Linie 3-3 in Fig. 2.

An zwei Platten 1. 2 eines ortsfesten Maschinengestells 3 ist in noch zu beschreibender Weise eine Schwenkachse 4 gelagert. Auf der Schwenkachse 4 sitzt mittels Lagern 5 schwenkbar ein Getriebegehäuse 6, aus dem seitlich das freie Ende einer im Gehäuse 6 drehend gelagerten und in bekannter Weise von einem Antriebsmotor angetriebenen Sägewelle 7 austritt. Mit dem freien Ende der Sägewelle 7 ist drehschlüssig ein Kreissägeblatt 8 in ebenfalls an sich bekannter Weise verbunden. Wenn das Getriebegehäuse 6 und mit ihm das rotierende Kreissägeblatt 8 um die Schwenkachse 4 verschwenkt werden, können auf einer Werkstückauflage 9 des Maschinengestells 3 angeordnete Werkstücke durchtrennt werden, wobei es wichtig ist. daß das Kreissägeblatt 8 zur Werkstückauflage 9 genau ausgerichtet ist.

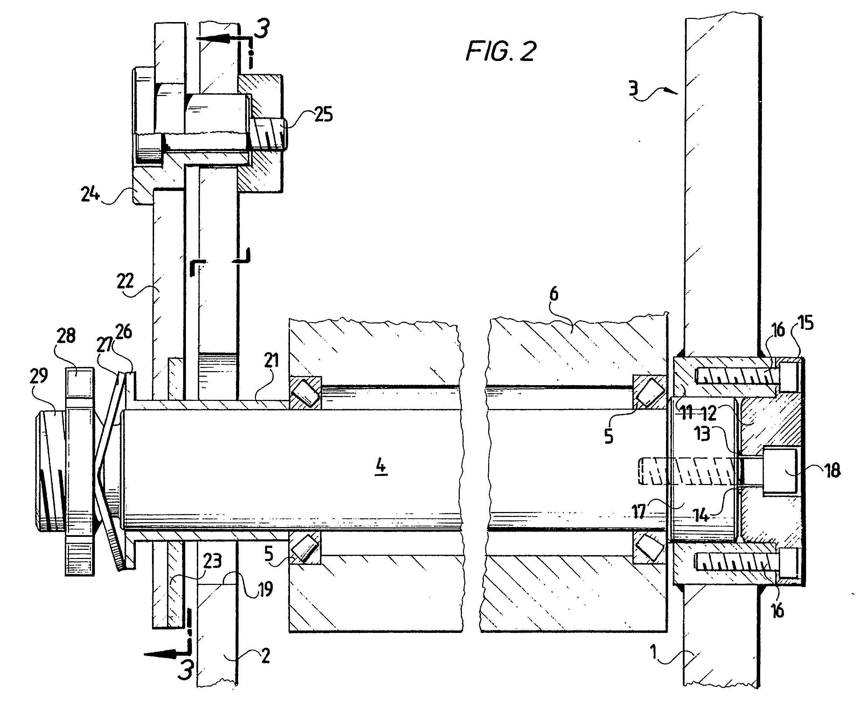

Die Fig. 2 zeigt im einzelnen die Lagerung der Schwenkachse 4 an den Platten 1, 2 des Maschinengestells 3. In eine entsprechende Ausnehmung der Platte 1 ist eine kreiszylindrische Buchse 11 eingeschweißt. In diese Buchse ragt teilweise ein Achsstummel 12 hinein. von dessen Stirnseite zentral ein zylindrischer Vorsprung 13 mit im wesentlichen ebener Stirnseite 14 absteht. Der Achsstummel 12 ist mittels eines an ihm vorgesehenen Bundes 15 durch Schraubbolzen 16 fest mit der Hülse 11 verschraubt.

Von der dem Achsstummel 12 gegenüberliegenden Seite her dringt ein an der Schwenkachse 4 ausgebildeter Bund 17 bündig in die Buchse 11 ein. Durch einen zentralen Schraubbolzen 18 sind der Bund 17 und der Achsstummel 12 fest miteinander verschraubt. wobei die Stirnseite des Bundes 17 an der Stirnseite 14 des am Achsstummel 12 ausgebildeten Vorsprungs 13 anliegt. Durch den Bolzen 18 ist gleichzeitig das vom Bund 17 gebildete Ende der Schwenkachse 4 fest mit dem Maschinengestell 3 verbunden.

Die der Platte 1 gegenüberliegende Platte 2 weist eine Ausnehmung 19 verhältnismäßig großen Durchmessers auf. die von der Schwenkachse 4 und einer darauf angeordneten Druckhülse 21 mit verhältnismäßig großem Spiel frei durchdrungen wird. Die Hülse 21 ist auf der Außenseite der Platte 2 von zwei Laschen 22, 23 bündig umschlossen. die zwischen sich einen von Null verschiedenen Winkel, vorzugsweise einen solchen von 90˚ einschließen. Die beiden Laschen 22, 23 sind. wie am Beispiel der Lasche 22 in Fig. 2 gezeigt, an einem Ende jeweils auf Exzenterbuchsen 24 drehbar gelagert, die ihrerseits mit Bezug auf an der Platte 2 festgelegte Schraubbolzen 25 exzentrisch verdrehbar sind. Durch Verdrehen der Exzenterbuchsen 24 können die Laschen 22, 23 einzeln im wesentlichen parallel zu ihrer Längserstreckung verschoben werden. Insgesamt ist somit eine Ausrichtung der Schwenkachse und damit letzten Endes des Kreissägeblattes 8 nach zwei Koordinatenrichtungen hin möglich, weil die beiden Laschen 22, 23 über die Druckhülse 21 die zweite, dem Bund 17 gegenüberliegende Lagerstelle für die Schwenkachse 4 vermitteln.

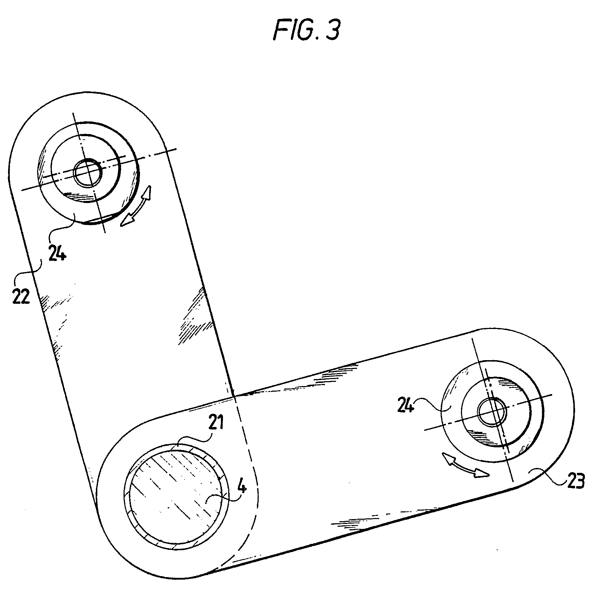

Wie in Fig. 3 dargestellt. überlappen sich die beiden Laschen 22, 23 im Bereich der Druckhülse 21 gegenseitig und sind dort derart abgestuft. daß sie im Bereich der Überlappung jeweils nur etwa die halbe Dicke aufweisen.

Es wurde gefunden. daß trotz der festen Verbindung des vom Bund 17 gebildeten Endes der Schwenkachse 4 mit dem Maschinengestell 3 Ausrichtbewegungen des gegenüberliegenden Wellenendes mit Hilfe der Laschen 22, 23 im erforderlichen Verstellbereich, der in der Regel beispielsweise nur einige hundertstel Millimeter oder weniger beträgt, ohne weiteres möglich, wobei sich die Achse 4 etwas verbiegen kann.

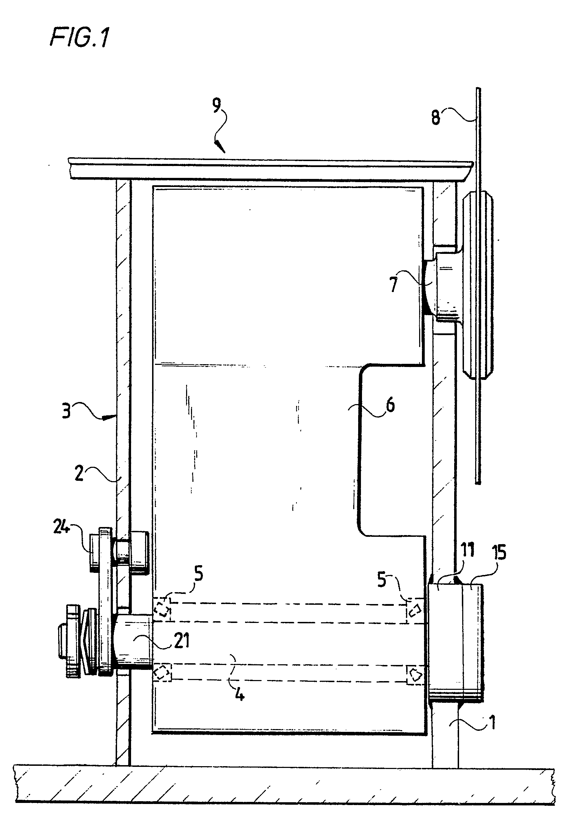

Wie aus Fig. 2 ersichtlich, sind die Drehlager 5, welche der Lagerung des Getriebegehäuses 6 auf der Schwenkachse 4 dienen, in an sich bekannter Weise als "schräg wirkende" Lager, also als Kegelrollenlager oder Schrägkugellager ausgebildet. Dies ermöglicht eine permanent spielfreie, vorgespannte Anordnung des Gehäuses 6 auf der Schwenkachse 4. Das in Fig. 1 und 2 rechte Kegelrollen- oder Schrägkugellager 5 liegt einerseits am Bund 17 der Schwenkachse und andererseits am Getriebegehäuse 6 an. Das gegenüberliegende Lager 5 (in Fig. 1 und 2 links gelegen) ist zwischen dem Getriebegehäuse 6 und der Druckhülse 21 angeordnet. Die Druckhülse 21 weist einen Flansch 26 auf, an welcher ein als Tellerfeder ausgebildetes Federmittel 27 angreift. Die Tellerfeder 27 liegt andererseits wie dargestellt an einer Mutter 28 an, die auf ein mit Gewinde versehenes Ende 29 der Schwenkachse 4 aufgeschraubt ist. Hierdurch ist die gesamte, von der Schwenkachse 4, dem Getriebegehäuse 6, und der Druckhülse 21 gebildete Anordnung permanent spielfrei vorgespannt.

## Ansprüche

1. Kreissägemaschine mit einem Maschinengestell, einem Getriebegehäuse, einem am Getriebegehäuse drehend gelagerten, motorisch angetriebenen Kreissägeblatt und einer am Maschinengestell angeordneten Schwenkachse zur - schwenkbaren Lagerung des Getriebegehäuses, **dadurch gekennzeichnet,** daß die Schwenkachse (4) an ihrem einen Ende (17) fest mit dem Maschinengestell (3) verbunden und an ihrem anderen Ende (29) in zwei einen Winkel zwischen sich einschließenden Laschen (22, 23) gelagert ist, und daß jede dieser Laschen (22, 23) über einen am Maschinengestell (3) drehbar gelagerten Exzenter (24) derart verstellbar ist, daß die Schwenkachse (4) und mit ihr das Kreissägeblatt (8) nach zwei Koordinatenrichtungen hin ausrichtbar ist.

2. Kreissägemaschine nach Anspruch 1, dadurch gekennzeichnet, daß zwischen der Schwenkachse (4) und den Laschen (22, 23) eine Druckhülse (21) angeordnet ist.

3. Kreissägemaschine nach Anspruch 2, dadurch gekennzeichnet, daß das Getriebegehäuse (6) durch zwei Kegelrollenlager oder Schrägkugellager (5) auf der Schwenkachse (4) gelagert ist, daß das eine dieser Lager (5) zwischen einem Bund (17) der Schwenkachse (4) und dem Getriebegehäuse (6) und das andere dieser Lager (5) zwischen dem Getriebegehäuse (6) und der Druckhülse (21) angeordnet ist, und daß zwischen der Druckhülse (21) und der Schwenkachse (4) ein Federmittel (27) vorgesehen ist, welches die gesamte Anordnung permanent spielfrei vorspannt.

4. Kreissägemaschine nach Anspruch 3, dadurch gekennzeichnet, daß das Federmittel (27) eine Tellerfeder ist.

FIG.1

FIG. 2

EP 0 297 469 A2

FIG. 3